# EUROPEAN PATENT APPLICATION

(11) **EP 3 599 491 A1**
(43) Date of publication of application: **29.01.2020**
(21) Application number: 18185561.0
(22) Date of filing: 25.07.2018
(51) Int. Cl.: G02B 6/38, G02B 6/44

(54) **STRAIN RELIEF DEVICE FOR A FIBER OPTICAL CABLE, ASSEMBLY AND METHOD FOR STRAIN RELIEVING A FIBER OPTICAL CABLE**

(71) Applicant: Corning Optical Communications LLC, Charlotte, NC 28216 (US)
(72) Inventor: Ruda, Michal, 93-430 Lodz (PL); Fabrykowski, Grzegorz, Dipl.-Ing., 95-010 Gmina Strykow (PL)
(74) Representative: Sturm, Christoph

(57) **Abstract**

Strain relief device (10) for a fiber optical cable (100), the fiber optical cable (100) having a cable jacket (101), an optical fiber (102) and strengthening elements (103). The strain relief device comprises a first basic body (11), a second basic body (12) and a living hinge (13) connecting the two basic bodies. The first basic body (11) has first opposite long sides (14), first opposite short sides (15) and at least one protrusion (16) providing a clamping pin for the strengthening elements (103). The second basic body (12) has second opposite long sides (17), second opposite short sides (18) and at least one opening (19) providing a clamping socket for the strengthening elements (103). The living hinge (13) connects the two basic bodies in such a way that one of the first long sides (14) of the first basic body (11) is pivotably attached to one of the second long sides (17) of the second basic body (12) such that the strain relief device (10) is transferable between an opened status and a closed status, wherein a respective protrusion (16) of the first basic body (11) is received within a respective opening (19) of the second basic body (12) when the strain relief device (10) is the closed status. The respective protrusion (16) of the first basic body (11) and the respective opening (19) of the second basic body (12) are dimensioned in such a way that there is an interference fit between the same when the strain relief device is the closed status. Fig. 4

## Description

The present patent application relates to a strain relief device for a fiber optical cable.

Further, the present patent application relates to an assembly having such a strain relief device and a fiber optical cable.

Further, the present patent application relates to a method for strain relieving a fiber optical cable.

When building data transmission networks from fiber optical cables, it is necessary to interconnect optical fibers of the cables and to store excess lengths of said optical fibers. The connection points and excess lengths must be handled in fiber optical distribution devices outside of buildings and inside of buildings.

Outside of buildings for so-called outdoor applications, connection points between optical fibers and excess lengths thereof, are typically accommodated in fiber optical distribution devices designed as cable sleeves or street cabinets. Inside of buildings for so-called indoor applications, connection points between optical fibers and excess lengths thereof, are typically accommodated in fiber optical distribution devices designed as distribution cabinets or distribution racks. Fiber optical distribution devices designed as wall boxes can be used both outside of buildings and inside of buildings.

Fiber optical distribution devices designed as wall boxes are known from the product catalogue entitled "Accessories for fiber optical networks, Edition 1, pages 184 to 187, issue 2001, Corning Cable Systems GmbH & Co. KG". The wall boxes disclosed in this catalogue comprise a housing and optical fiber handling components, specifically splice cassettes and/or patch panels and/or strain relief devices, positioned inside the housing for handling connection points and excess lengths of optical fibers and for providing strain relief for the optical cables. One of the key issues within fiber optical distribution devices is strain relieving of the optical cables entering the fiber optical distribution device.

US 9 110 267 B2 discloses a strain relief device for a fiber optical cable, the fiber optical cable having at least a cable jacket, an optical fiber and strengthening elements like yarn. The strain relief device known from US 9 110 267 B2 comprises a first basic body, a second basic body and a living hinge connecting the first basic body and the second basic body. The first basic body has first opposite long sides, first opposite short sides and a protrusion providing a clamping pin for the strengthening elements of the fiber optical cable. The second basic body has second opposite long sides, second opposite short sides and an opening providing a clamping socket for the strengthening elements of the fiber optical cable. The living hinge connects the first basic body and the second basic body in such a way that one of the first long sides of the first basic body is pivotably attached to one of the second long sides of the second basic body such that the strain relief device is transferable between an opened status and a closed status by pivoting the basic bodies relative to each other. The protrusion of the first basic body is received within the opening of the second basic body when the strain relief device is the closed status. The opening of the second basic body has a lager dimension than the protrusion of the first basic body thereby providing a clearance fit between the protrusion and the opening when the strain relief device is the closed status. The strengthening elements of the fiber optical cable need to be wrapped around the protrusion of the first basic body before closing the strain relief device.

EP 2 570 832 A discloses another strain relief device for a fiber optical cable. The strain relief device known from EP 2 570 832 A also comprises a first basic body, a second basic body and living hinges connecting the first basic body and the second basic body. The living hinges connect the first basic body and the second basic body in such a way that the first basic body is pivotably attached to the second basic body such that the strain relief device is transferable between an opened status and a closed status by pivoting the basic bodies relative to each other. The strengthening elements are clamped between profiled surfaces of middle segments of the basic bodies when the strain relief device is in the closed status. The strengthening elements of the fiber optical cable need to be wrapped around the middle segments of the basic bodies after closing the strain relief device.

The strain relief device according to the present patent application comprises a first basic body, a second basic body and a living hinge connecting the first basic body and the second basic body. The first basic body of the strain relief device according to the present patent application has first opposite long sides, first opposite short sides and at least one protrusion providing a clamping pin for the strengthening elements of the fiber optical cable. The second basic body of the strain relief device according to the present patent application has second opposite long sides, second opposite short sides and at least one opening providing a clamping socket for the strengthening elements of the fiber optical cable. The living hinge of the strain relief device according to the present patent application connects the first basic body and the second basic body in such a way that one of the first long sides of the first basic body is pivotably attached to one of the second long sides of the second basic body such that the strain relief device is transferable between an opened status and a closed status by pivoting the basic bodies relative to each other. A respective protrusion providing a clamping pin of the first basic body is received within a respective opening providing a clamping socket of the second basic body when the strain relief device is the closed status.

According to the present patent application, the respective protrusion of the first basic body providing a clamping pin and the respective opening of the second basic body providing a clamping socket are dimensioned in such a way that there is an interference fit between the respective protrusion received within a respective opening when the strain relief device is the closed status. So, the respective protrusion of the first basic body has at least partially a lager dimension than the respective opening of the second basic body.

When the strain relief device according to the present patent application is the closed status, the interference fit between the respective protrusion received within the respective opening provides a very secure and reliable clamping of the strengthening elements of the fiber optical cable without the need to wrap the strengthening elements around a portion of the strain relief device.

The strain relief device according to the present patent application allows a quick and easy installation. No additional tools are needed for installation.

The strain relief device according to the present patent application provides an easy and fast way to secure and strain relief a fiber optical cable on a fiber optical distribution device, especially on a patch panel.

The strain relief device according to the present patent application allows single fiber optical cable entry through the a fiber optical distribution device, especially a patch panel, rather than standard entry on the back of the hardware equipment, hence allowing complete splicing with full front access and no need for rear or side access. That strain relief device of to the present patent application can be of significant advantage in central office areas where distribution racks with optical hardware are settled side-by-side and back-to-back very dense and side or back access is either not available or requires effort.

The first basic body of the strain relief device according to the present patent application may have several protrusions each providing a clamping pin. The second basic body of the strain relief device according to the present patent application may have several openings each providing a clamping socket. In the closed status of the strain relief device each protrusion of the first basic body is positioned within one opening of the second basic body with an interference fit between the respective protrusion received within a respective opening. The protrusions of the first basic body of the strain relief device according to the present patent application each have a first longitudinal axis. The openings of the second basic body of the strain relief device according to the present patent application each have a second longitudinal axis. When the strain relief device is in a opened status in which the basic bodies are pivoted relative to each other compared to the closed status of the same around the living hinge by 180°, the first longitudinal axis of each protrusion of the first basic body runs parallel to the second longitudinal axis of each opening of the second basic body, namely is such a way that neither the first longitudinal axis of the protrusions nor the second longitudinal axis of the openings intersect a pivoting axis of the living hinge. The strain relief device provides an easy and fast way to provide strain relief without the need to wrap the strengthening elements around a portion of the strain relief device.

The strain relief device according to the present patent application may have a cable guide. The first basic body provides a first half-shell and the second basic body provides a second half-shell of the cable guide. The second half-shell of the cable guide comprises protrusions and the first half-shell of the cable guide comprises recesses receiving the protrusions of the second half-shell when the strain relief device is the closed status. The strain relief device according to the present patent application is an add-on device that sits on the single fiber optical cable. The strain relief device according to the present patent application firmly secures a single fiber optical cable when entering through fiber optical distribution device, especially through a patch panel.

The second half-shell of the cable guide is dimensioned in such a way that there is an additional interference fit, namely an interference fit between the second half-shell and the fiber optical cable positioned within the strain relief device. This provides a strain relief for the fiber optical cable positioned in the second half-shell of the cable guide when the strain relief device is opened as well as a strain relief for the fiber optical cable positioned in the first and second half-shells of the cable guide when the strain relief device is closed. This further improves an easy and fast way to secure and strain relief a fiber optical cable on a fiber optical distribution device.

The assembly according to the present patent application is defined in claim 14.

The method for strain relieving a fiber optical cable according to the present patent application is defined in claim 15.

Preferred embodiments of the strain relief device are given in the dependent claims and the description below. Exemplary embodiments will be explained in more detail with reference to the drawing, in which:
- Figure 1: shows a perspective view of a strain relief device according to the present patent application for a fiber optical cable in an opened status of the same;
- Figure 2: shows the strain relief device of figure 1 together with a fiber optical cable not positioned within the strain relief device;
- Figure 3: shows the strain relief device of figure 1 together with the fiber optical cable positioned within the strain relief device;
- Figure 4: shows the strain relief device of figure 1 together with the fiber optical cable positioned within the strain relief device and with the strengthening elements placed over openings;
- Figure 5: shows the assembly of Figure 6 before closing the strain relief device;
- Figure 6: shows strain relief device in a closed status together with the fiber optical cable and a cable boot;
- Figure 7: shows a patch panel of a fiber optical distribution device with two strain relief device according to Figure 6.

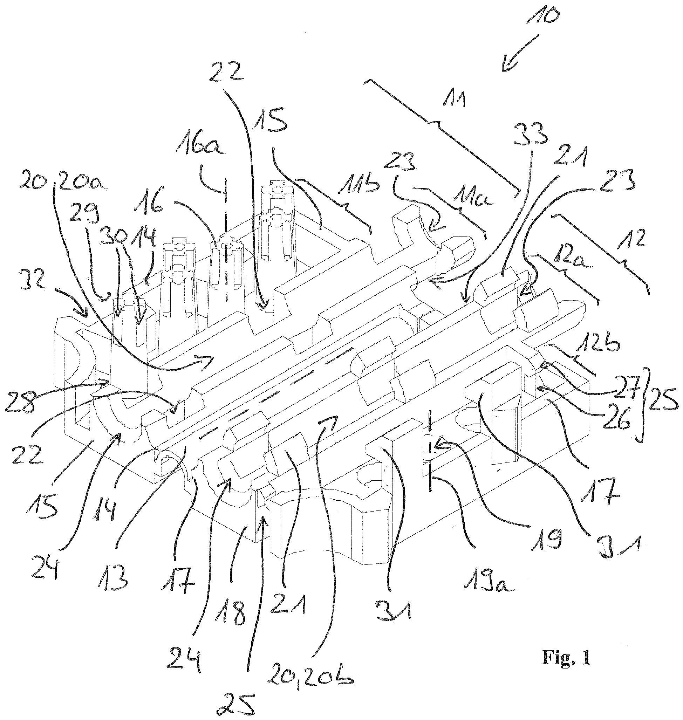

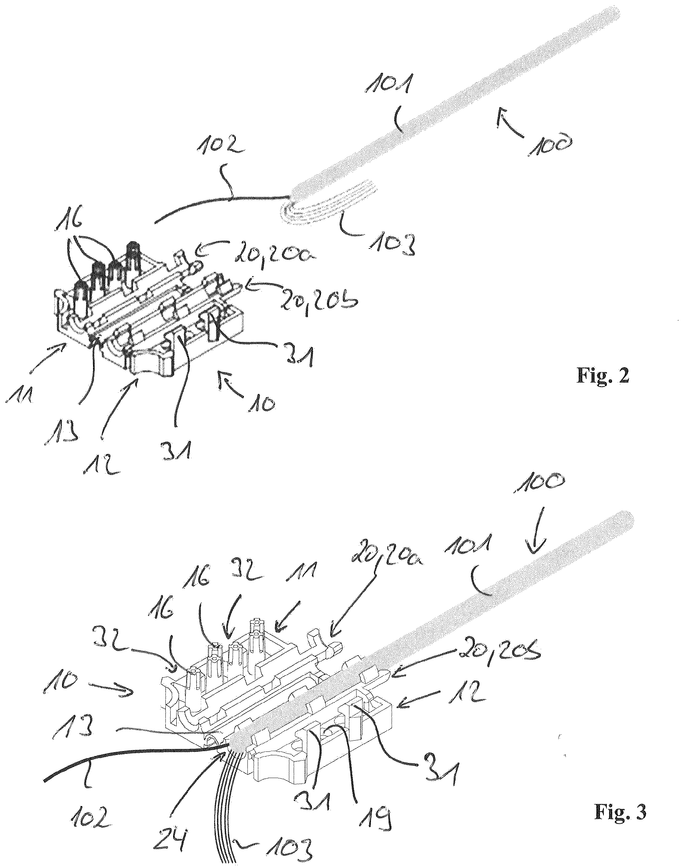

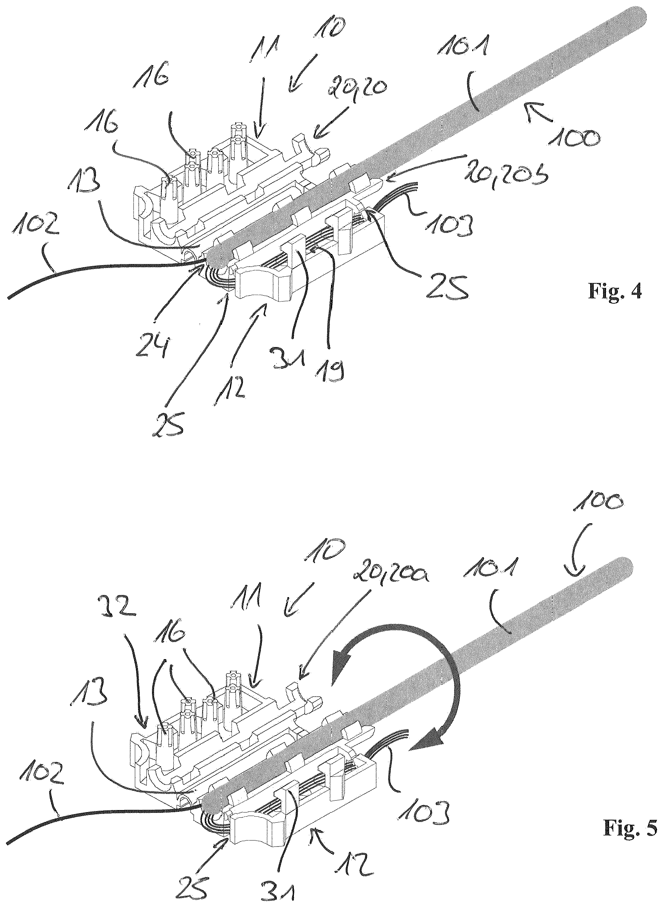

The present patent application relates to a strain relief device 10 for a fiber optical cable 100. Figure 1 shows the strain relief device 10 in an opened status of the same without a fiber optical cable 100. Figure 2 to Figure 6 each show the strain relief device 10 together with a fiber optical cable 100 in different statuses of the strain relief device 10. The fiber optical cable 100 has at least a cable jacket 101, an optical fiber 102 and strengthening elements 103 like aramid yarn.

The strain relief device 10 comprises a first basic body 11, a second basic body 12 a living hinge 13 connecting the first basic body 11 and the second basic body 12.

The first basic body 11 has first opposite long sides 14 and first opposite short sides 15. The first basic body 11 has further at least one protrusion 16 providing a clamping pin for the strengthening elements 103 of the fiber optical cable 100. In the preferred embodiment the first basic body 11 has several protrusions 16 each providing a clamping pin for the strengthening elements 103 of the fiber optical cable 100.

The second basic body 12 has second opposite long sides 17 and second opposite short sides 18. The second basic body 12 has further at least one opening 19 providing a clamping socket for the strengthening elements 103 of the fiber optical cable 100. In the preferred embodiment the second basic body 12 has several openings 19 each providing a clamping socket for the strengthening elements 103 of the fiber optical cable 100.

The living hinge 13 connects the first basic body 11 and the second basic body 12 in such a way that one of the first long sides 14 of the first basic body 11 is pivotably attached to one of the second long sides 17 of the second basic body 12 such that the strain relief device 10 is transferable between an opened status and a closed status by pivoting the basic bodies 11, 12 relative to each other.

When the strain relief device 10 is the closed status, a respective protrusion 16 - providing a clamping pin - of the first basic body 11 is received within a respective opening 19 - providing a clamping socket - of the second basic body 12. The respective protrusion 16 of the first basic body 11 and the respective opening 19 of the second basic body 12 are dimensioned in such a way that there is an interference fit between the respective protrusion 16 or the respective clamping pin received within a respective opening 19 or respective clamping socket when the strain relief device 10 is the closed status. In case of several protrusions 16 and several openings 19, in the closed status of the strain relief device 10 each protrusion 16 of the first basic body 11 is positioned within one opening 19 of the second basic body 12 with an interference fit between the respective protrusion 16 received within a respective opening 19.

The respective protrusion 16 or clamping pin of the first basic body 11 has a first longitudinal axis 16a. The respective protrusion 16 of the first basic body 11 has a cylindrical or cylinder-like or frustum or frustum-like shape with a first end 28 attached to the first basic body 11 and a send end 29 freely protruding from the first basic body 11. The respective opening 19 or clamping socket of the second basic body 12 has a second longitudinal axis 19a.

As mentioned above, the respective protrusion 16 or clamping pin of the first basic body 11 and the respective opening 19 or clamping socket of the second basic body 12 are dimensioned in such a way that there is an interference fit between the respective protrusion 16 received within a respective opening 19 when the strain relief device 10 is the closed status.

In order to provide that interference fit between the respective protrusion 16 received within a respective opening 19 when the strain relief device 10, the respective protrusion 16 of the first basic body 11 has at least partially a lager dimension than the respective opening 19 of the second basic body 12. The respective protrusion 16 of the first basic body 11 has at least partially between the first end 28 and the send end 19 an outer diameter being larger than an inner diameter of the respective opening 19 of the second basic body 12.

The respective protrusion 16 of the first basic body 11 has at an outer surface of the same slots 30 extending from the send end 29 in the direction towards the first end 28. These slots 30 facilitate the insertion of the respective protrusion 16 of the first basic body 11 into the respective opening 19 of the second basic body 12 during the closing of the strain relief device 10 while clamping the strengthening elements 103 of the fiber optical cable 100 between the same.

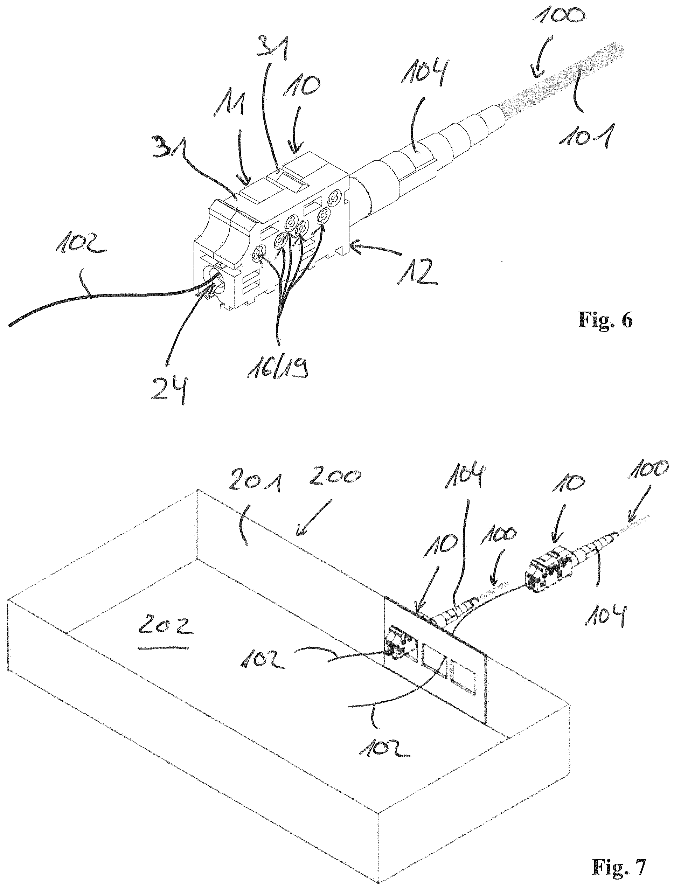

When the strain relief device 10 is in a opened status (see Figures 1, 2, 3, 4, 5) in which the basic bodies 11, 12 are pivoted relative to each other compared to the closed status of the same (see Figures 6, 7) around the living hinge 13 by 180°, the first longitudinal axis 16a of the each of the protrusions 16 of the first basic body 11 runs parallel to the second longitudinal axis 19a of each of the openings 19 of the second basic body 12, namely is such a way that neither the first longitudinal axis 16a of the protrusions 16 nor the second longitudinal axis 19a of the openings 19 intersect a pivoting axis 13a of the living hinge 13.

The strain relief device 10 comprises a cable guide 20. The first basic body 11 provides a first half-shell 20a of the cable guide 20 and the second basic body 12 provides a second half-shell 20b of the cable guide 20. The second half-shell 20b of the cable guide 20 comprises protrusions 21 and the first half-shell 20a of the cable guide 20 comprises recesses 22 receiving the protrusions 21 of the second half-shell 20b when the strain relief device 20 is the closed status.

The first basic body 11 provides the first half-shell 20a of the cable guide 20 in a first subarea 11a of the same and the several protrusions 16 in a second subarea 11b of the same. The second basic body 12 provides the second half-shell 20b of the cable guide 20 in a first subarea 12a of the same and the several openings 19 in a second subarea 12b of the same. The first subareas 11a, 12a are positioned between the living hinge 13 and the second subareas 11b, 12b. The first half-shell 20a of the cable guide 20 and the second half-shell 20b of the cable guide 20 both run parallel to the pivoting axis 13a of the living hinge 13.

The second half-shell 20b of the cable guide 20 is dimensioned in such a way that there is an interference fit between the second half-shell 20b and the fiber optical cable 100, namely the cable jacket 101, when the fiber optical cable 100 is positioned within the second half-shell 20b of the cable guide 20 when the strain relief device 10 is the opened status an in the closed status.

The first half-shell 20a of the cable guide 20 and the second half-shell 20b of the cable guide 20 define a cable entry port 23 for the fiber optical cable 100 at short sides 15, 18 of the basic bodies 11, 12 and an optical fiber exit port 24 for the optical fiber 102 of the fiber optical cable 100 at opposite short sides 15, 18 of the basic bodies 11, 12. The cable entry port 23 is provided at the second subareas 12a, 12b of the basic bodies 11, 12 in axial extension of the cable guide 20 by protrusions 33 protruding from the respective short sides 15, 18 of the basic bodies 11, 12.

The second subarea 12b of the second basic body 12 has further at each of the opposite short sides 18 of the same exit/entry gates 25 for the strengthening elements 103 of the fiber optical cable 100. These exit/entry gates 25 for the strengthening elements 103 are defined by openings 26 in the respective short side 18 and by threading slots 27 delimiting the respective opening 26.

The present application further provides an assembly comprising a fiber optical cable 100 and a strain relief device 10 as described above.

The present application further provides a method for strain relieving a fiber optical cable.

The method for strain relieving a fiber optical cable 100 comprises at least the following steps:
Provide a fiber optical cable 100, the fiber optical cable 100 having at least a cable jacket 101, an optical fiber 102 and strengthening elements like yarn 103.

Provide a strain relief device 10 as described above.

Cut the cable jacket 101 of the fiber optical cable 100 thereby exposing the or each optical fiber 102 and exposing the strengthening elements 103 of the fiber optical cable 100. A cable boot 104 may be placed on the cable 100.

Place the fiber optical cable 100 in the strain relief device 10 when the strain relief device 10 is an opened status. When the strain relief device 10 is an opened status, the fiber optical cable 100 is placed within the second half-shell 20b of the cable guide 20 provided by the second basic body 12. The fiber optical cable 100 enters into the strain relief device 10 through the cable entry port 23. The fiber optical cable 100 is placed in such a way in the opened strain relief device 10, namely in the second half-shell 20b of the cable guide 20, that the cable jacket 101 does not protrude from the second basic body 12. The strengthening elements 103 are thread through the threading slots 27 into the openings 26 of the exit/entry gates 25. The strengthening elements 103 are thereby placed over the openings 19 of the second basic body 12. The optical fiber 102 is lead out of the opened strain relief device 10 through the optical fiber exit port 24.

Close the strain relief device 10 by pivoting the basic bodies 11 and 12 relative to each other using the living hinge 13. Thereby the protrusions 16 of the first basic body 11 are placed with an interference fit in the openings 19 of the second basic body 12. Thereby the strengthening elements 103 become pushed and penetrated into the respective opening 19 and thereby clamped between the respective protrusion 16 of the first basic body 11 and the respective opening 19 of the second basic body 12.

After the strain relief device 10 has been closed, excess length of the strengthening elements 103 sticking out of the exit gate 25 may be cut off. The cable boot 104 boot can then be placed close to the strain relief device 10. The cable boot 104 can be fixed on a cylinder that is formed by the protrusions 33 of the cable entry port 23 when the strain relief device 10 closes.

When the strain relief device 10 becomes closed, barb-like fastening elements 31 like snap locks of the second basic body 12 snap into corresponding recesses 32 of the first basic body 11. Thereby the strain relief device 10 can be kept in the closed status. The barb-like fastening elements 31 and the recesses 32 are provided at longs sides 14, 17 of the basic bodies 11, 12 opposite to the longs sides 14, 17 connected by the living hinge 13.

After the strain relief device 10 has been closed thereby providing on the one hand strain relief for the fiber optical cable 100 in the region of the cable guide 20 and on the other hand strain relief for the strengthening elements 103 of fiber optical cable 100 in the region of the protrusions 16 / openings 19, the assembly comprising the fiber optical cable 100 and the strain relief device 10 can be installed e.g. in a patch panel 201 of a fiber optical distribution device 200. Figure 7 shows one assembly already installed in an opening of the patch panel 201 and another assembly before installing the same in another opening of the patch panel 201. An interior 202 of the fiber optical distribution device 200 provides a protected area in which fiber optical splices can be handled. The exterior provides an unprotected area.

The strain relief device 10 being subject of this application provides an easy and fast way to secure and strain relief a fiber optical cable 100 e.g. on a patch panel 201. The strain relief device 10 allows single fiber cable entry through the patch panel 201 rather than standard entry on the back of the hardware equipment, hence allowing complete splicing with full front access and no need for rear or side access. The strain relief device 10 is of significant advantage in a central office area where distribution racks with fiber optical hardware is settled side-by-side and back-to-back very dense and side or back access is either not available or requires effort. The strain relief device 10 being subject of this application is an add-on device that sits on the single fiber optical cable 100. It is made of plastic material that is capable of providing the living hinge 13, preferably of polyamide. The main function of the strain relief device 10 is to firmly secure the fiber optical cable 100 when entering into e.g. a patch panel. The strain relief function is realized by clamping the strengthening elements 103 like aramid yarns of the cable 100 in between the protrusions 16 and openings 19 in such a way that there is an interference fit between the protrusions 16 received within the openings 19 when the strain relief device 10 is the closed status. The strain relief function can be improved when the second half-shell 20b of the cable guide 20 is dimensioned in such a way that there is an additional interference fit between the second half-shell 20b of the cable guide 20 and the fiber optical cable 100 positioned within the strain relief device 10.

### List of reference numerals

- 10: strain relief device
- 11: first basic body
- 11a: first subarea
- 11b: second subarea
- 12: second basic body
- 12a: first subarea
- 12b: second subarea
- 13: living hinge
- 13a: pivoting axis
- 14: first long side
- 15: first short side
- 16: protrusion
- 16a: longitudinal axis
- 17: second long side
- 18: second short side
- 19: opening
- 19a: longitudinal axis
- 20: cable guide
- 20a: first half-shell
- 20b: second half-shell
- 21: protrusion
- 22: recess
- 23: cable entry port
- 24: optical fiber exit port
- 25: exit/entry gate
- 26: opening
- 27: threading slot
- 28: first end
- 29: second end
- 30: slot
- 31: fastening element
- 32: recess
- 33: protrusion

- 100: fiber optical cable
- 101: cable jacket
- 102: optical fiber
- 103: strengthening elements
- 104: cable boot

- 200: fiber optical distribution device
- 201: patch panel
- 202: interior

## Claims

1. Strain relief device (10) for a fiber optical cable (100), the fiber optical cable (100) having at least a cable jacket (101), an optical fiber (102) and strengthening elements (103) like yarn,
the strain relief device (10) comprising
a first basic body (11), the first basic body (11) having
first opposite long sides (14) and first opposite short sides (15),
at least one protrusion (16) providing a clamping pin for the strengthening elements (103) of the fiber optical cable (100),
a second basic body (12), the second basic body (12) having
second opposite long sides (17) and second opposite short sides (18),
at least one opening (19) providing a clamping socket for the strengthening elements (103) of the fiber optical cable (100),
a living hinge (13) connecting the first basic body (11) and the second basic body (12) in such a way that one of the first long sides (14) of the first basic body (11) is pivotably attached to one of the second long sides (17) of the second basic body (12) such that the strain relief device (10) is transferable between an opened status and a closed status by pivoting the basic bodies (11, 12) relative to each other,
wherein a respective protrusion (16) of the first basic body (11) is received within a respective opening (19) of the second basic body (12) when the strain relief device (10) is the closed status,
**characterised in that**
the respective protrusion (16) of the first basic body (11) and the respective opening (19) of the second basic body (12) are dimensioned in such a way that there is an interference fit between the respective protrusion (16) received within a respective opening (19) when the strain relief device (10) is the closed status.

2. Strain relief device as claimed in claim 1, **characterised in that**
the respective protrusion (16) of the first basic body (11) has a first longitudinal axis (16a),
the respective opening (19) of the second basic body (12) has a second longitudinal axis (19a),
when the strain relief device (10) is in a opened status in which the basic bodies (11, 12) are pivoted relative to each other compared to the closed status of the same around the living hinge (13) by 180°, the first longitudinal axis (16a) of the respective protrusion (16) of the first basic body (11) runs parallel to the second longitudinal axis (19a) of the respective opening (19) of the second basic body (12), namely is such a way that neither the first longitudinal axis (16a) of the respective protrusion (16) nor the second longitudinal axis (19a) of the respective opening (19) intersects a pivoting axis (13a) of the living hinge (13).

3. Strain relief device as claimed in claim 1 or 2, **characterised in that**
the first basic body (11) has several protrusions (16) each providing a clamping pin;
the second basic body (12) has several openings (19) each providing a clamping socket;
in the closed status of the strain relief device (10) each protrusion (16) of the first basic body (11) is positioned within one opening (19) of the second basic body (12) with an interference fit between the respective protrusion (16) received within a respective opening (19).

4. Strain relief device as claimed in one of claims 1 to 3, **characterised in that**
the respective protrusion (16) of the first basic body (11) has at least partially a lager dimension than the respective opening (19) of the second basic body (12).

5. Strain relief device as claimed in claim 4, **characterised in that**
the respective protrusion (16) of the first basic body (11) has a cylindrical or frustum shape with a first end (28) attached to the first basic body (11) and a send end (29) protruding from the first basic body (11),
the respective protrusion (16) of the first basic body (11) has at least partially between the first end (28) and the send end (19) an outer diameter being larger than an inner diameter of the respective opening (19) of the second basic body (12).

6. Strain relief device as claimed in claim 5, **characterised in that**
the respective protrusion (16) of the first basic body (11) has at an outer surface of the same slots (30) extending from the second end (29) in the direction towards the first end (28).

7. Strain relief device as claimed in one of claims 1 to 6, **characterised by**
a cable guide (20), wherein the first basic body (11) provides a first half-shell (20a) and the second basic body (12) provides a second half-shell (20b) of the cable guide (20);
the second half-shell (20b) of the cable guide (20) comprises protrusions (21) and the first half-shell (20a) of the cable guide (20) comprises recesses (22) receiving the protrusions (21) of the second half-shell (20b) when the strain relief device (20) is the closed status.

8. Strain relief device as claimed in claim 7, **characterised in that**
the second half-shell (20b) of the cable guide (20) is dimensioned in such a way that there is an interference fit between the second half-shell (20b) and the fiber optical cable (100) positioned within the same when the strain relief device (10) is the opened and closed status.

9. Strain relief device as claimed in claim 7 or 8, **characterised in that**
the first half-shell (20a) of the cable guide (20) and second half-shell (20b) of the cable guide (20) run parallel to a pivoting axis (13a) of the living hinge (13).

10. Strain relief device as claimed in one of claims 7 to 9, **characterised in that**
the first half-shell (20a) of the cable guide (20) and the second half-shell (20b) of the cable guide (20) define a cable entry port (23) for the fiber optical cable (100) at short sides (15, 18) of the basic bodies (11, 12) and an optical fiber exit port (24) for the optical fiber (102) of the fiber optical cable (100) at opposite short sides (15, 18) of the basic bodies (11, 12).

11. Strain relief device as claimed in claim 3 and in one of claims 7 to 10, **characterised in that**
the first basic body (11) provides the first half-shell (20a) of the cable guide (20) in a first subarea (11a) of the same and the several protrusions (16) in a second subarea (11b) of the same,
the second basic body (12) provides the second half-shell (20b) of the cable guide (20) in a first subarea (12a) of the same and the several openings (19) in a second subarea (12b) of the same,
the first subareas (11a, 12a) are positioned between the living hinge (13) and the second subareas (11b, 12b).

12. Strain relief device as claimed in claim 11, **characterised in that**
the second subarea (12b) of the second basic body (12) has at each of the opposite short sides (18) exit/entry gates (25) for the strengthening elements (103) of the fiber optical cable (100).

13. Strain relief device as claimed in claim 12, **characterised in that**
the exit/entry gates (25) are defined by openings (26) in the respective short side (18) and by threading slots (27) delimiting the respective opening (26).

14. Assembly comprising:
a fiber optical cable (100), the fiber optical cable (100) having at least a cable jacket (101), an optical fiber (102) and strengthening elements (103) like yarn;
a strain relief device (10) as claimed in one of claims 1 to 13.

15. Method for strain relieving a fiber optical cable (100) with the following steps:
providing a fiber optical cable (100), the fiber optical cable (100) having at least a cable jacket (101), an optical fiber (102) and strengthening elements like yarn (103);
providing a strain relief device (10) as claimed in one of claims 1 to 13;
cutting the cable jacket (101) thereby exposing the optical fiber (102) and strengthening elements (103);
placing the fiber optical cable (100) in the opened strain relief device (10) and placing the strengthening elements (103) over the or each opening (19) of the second basic body (12) while leading the optical fiber (102) out of the opened strain relief device (10),
closing the strain relief device (10) by pivoting the basic bodies (11, 12) relative to each other using the living hinge (13), thereby placing the respective protrusion (16) of the first basic body (11) with an interference fit in the respective opening (19) of the second basic body (12) and thereby clamping the strengthening elements (103) between the respective protrusion (16) of the first basic body (11) and the respective opening (19) of the second basic body (12).
